# EUROPÄISCHE PATENTSCHRIFT

(11) **EP 3 330 201 B1**
(45) Veröffentlichungstag und Bekanntmachung des Hinweises auf die Patenterteilung: **11.03.2020**
(21) Anmeldenummer: 17203814.3
(22) Anmeldetag: 27.11.2017
(51) Int. Cl.: B65G 1/137, B65G 1/04

(54) **VERFAHREN ZUR EIN- UND/ODER AUSLAGERUNG VON PAKETEN IN EINE BESTIMMTE ODER AUS EINER BESTIMMTEN LAGERREGALGASSE EINES LAGERREGALS**
METHOD FOR STORING AND/OR REMOVAL OF PACKETS TO OR FROM A SPECIFIC SHELF AISLE OF A SHELVING SYSTEM
PROCÉDÉ DE STOCKAGE ET/OU DE DISTRIBUTION DE COLIS DANS UNE ALLÉE DE RAYONNAGE DÉTERMINÉE OU D'UNE ALLÉE DE RAYONNAGE DÉTERMINÉE D'UN RAYONNAGE

(30) Priorität: 02.12.2016 DE 102016123357
(43) Veröffentlichungstag der Anmeldung: 06.06.2018
(73) Patentinhaber: Dematic GmbH, 63150 Heusenstamm (DE)
(72) Erfinder: MEURER, Hans Christoph, 64380 Roßdorf (DE)
(74) Vertreter: Moser Götze & Partner Patentanwälte mbB

(56) Entgegenhaltungen:
- EP-A1- 2 287 093
- EP-A1- 2 826 728
- FR-A1- 2 115 486
- JP-A- 2009 208 868
- US-B1- 6 622 845

## Beschreibung

Die Erfindung betrifft ein Verfahren zur Einlagerung und/oder Auslagerung von Paketen mit oder ohne Ladehilfsmittel in eine bestimmte oder aus einer bestimmten Lagerregalgasse eines Lagerregals, bei dem eine Verteilstrecke Pakete bei der Einlagerung anfördert und/oder bei der Auslagerung abfördert, wobei die Verteilstrecke benachbarte Ein- und/oder Ausschleusungen aufweist, welche auf Ein- und/oder Auslagerstrecken führen, die jeweils eine Lagerregalgasse ver- oder entsorgen.

In der Intralogistik ist ein Trend zu immer größeren Anlagen zu erkennen. Dies resultiert aus allgemein steigendem Warenumschlag, kleinteiligeren Lieferungen (E-Commerce) und dadurch mehr Bewegungen innerhalb eines Warenlagers sowie aus der Zusammenlegung von Funktionen (Regional/National/ International, Handelskanäle E-Commerce/Läden).

Innerhalb der automatisierten Anlagen (Warenlager) wächst zudem auch der Anteil an Kleinteilelagern für Kartons und Behälter. Ursache hierfür sind zum einen steigende Vielfalt von Artikeln. Zum anderen ergibt sich aus dem Wunsch nach kürzeren Zugriffszeiten auf die Artikel im Lagerbestand eine Verschiebung von der Lagerung von Kartons auf Palette zu Direktlagerung von Kartons in automatischen Lagern.

Daher werden zunehmend automatisierte Kleinteilelager mit sehr hoher Kapazität (z.B. 500000 Kartons und/oder Behälter) gebaut. Mit der Lagergröße wachsen gegenüber bisher installierten Anlagen entsprechend auch die Ein- und Auslagerleistung (z. B. 10000 Ladungseinheiten pro Stunde) und die Anzahl Gassen (z. B. > 30).

Normalerweise ist es erforderlich, von jeder Wareneingangslinie jede Gasse im Kleinteilelager zu erreichen.

Dies legt eine Einlagerung in das Kleinteilelager mittels einer einzigen Verteilstrecke mit je einer Abzweigung zu jeder einzelnen Gasse nahe. Eine solche typische technische Ausführung ist der Linearsorter mit einer Leistung > 10 000 Ladungseinheiten pro Stunde. Die Erfindung ist insbesondere für solche Hochleistungsanlagen vorgesehen, kann aber auch bei Anlagen mit geringere Leistung eingesetzt werden.

Bei einem Übergang von einer Verteilstrecke eines Lagersystems auf Einlagerstrecken werden Ladungseinheiten, beispielsweise Pakete, aufgrund einer geringeren Transportleistung auf den Einlagerstrecken stark abgebremst. Bei einer hohen Ausschleusrate kann dies zur Überlastung einer Einlagerstrecke und damit zur Staubildung und einer verminderten Leistung des Lagersystems führen. Umgekehrt kann die volle Auslagerleistung des Lagers nur erreicht werden, wenn die Auslagerströme annähernd gleichmäßig auf die Gassen verteilt sind (die Leistung einer Gasse mit einem Auslagerstich ist wesentlich geringer als die Leistung der Sammelstrecke).

Die DE 10 2009 029 438 A1 offenbart ein Regallagersystem mit einem Regallager, das mehrere benachbart zueinander angeordnete Regalreihen aufweist sowie Regalgassen, die jeweils zwischen benachbart zueinander angeordneten Regalreihen gegeben sind, wobei die Regalreihen jeweils in vertikaler Richtung mehrere Regalebenen ausbilden; ein oder mehrere Bahnfahrzeuge zum Aufnehmen und zum Transport von in den Regalreihen einzulagernden oder aus den Regalreihen auszulagernden Transporthilfsmitteln; erste Führungsbahnen zum Führen der Bahnfahrzeuge, wobei diese ersten Führungsbahnen in Längsrichtung einer jeweiligen Regalgasse verlaufen, so dass das jeweils wenigstens eine Bahnfahrzeug mittels wenigstens einer ersten Führungsbahn in Längsrichtung der jeweiligen Regalgasse verlagerbar ist; einer oder mehreren ersten Vertikalfördereinrichtungen für die vertikale Förderung von Bahnfahrzeugen und/oder Transporthilfsmitteln über mehrere Regalebenen; wobei wenigstens eine erste Vertikalfördereinrichtung in einer Regalgasse angeordnet ist, oder wenigstens eine erste Vertikalfördereinrichtung in einer Regalreihe angeordnet ist, so dass diese erste Vertikalfördereinrichtung in die aus den Regalreihen und den zwischen Regalreihen sich erstreckenden Regalgassen gebildete Regal-Gassen-Einheit integriert ist.

Die EP 2 826 728 A1 offenbart ein Verfahren zur Einlagerung und/oder Auslagerung von Paketen nach dem Oberbegriff des Anspruchs 1. Insbesondere, offenbart das Dokument ein Verfahren zur Bereitstellung von Auftragseinheiten durch Kommissionieren von Produkteinheiten in einem Lagersystem. Das Lagersystem verfügt über einen manuellen Lager- und Kommissionierbereich sowie über einen automatisierten Lagerregalbereich. Im automatisierten Lagerregalbereich sind mehretagige Lagerregale paarweise Rücken-an-Rücken angeordnet. Zwischen den Lagerregalpaaren liegt jeweils ein Gang, in welchem eine automatische Regalbedienvorrichtung zum Ein- und Auslagern von Auftrags- und/oder Produkteinheiten agiert. Der manuelle Lager- und Kommissionierbereich ist mit dem automatisierten Lagerregalbereich durch einen Transportförderer verbunden. An den Transportförderer sind Lagereingangs- und Lagerausgangsförderer angeschlossen. Mittels eines Lagereingangsförderers werden einem Lagerregal Auftrags- und/oder Produkteinheiten zugeführt und mittels eines Lagerausgangsförderers Auftrags- und/oder Produkteinheiten aus einem Lagerregal abgeführt. Zwischen zwei benachbarten Lagerregalen können mittels eines Weiterleitungsförderers, der mit dem Lagereingangsförderer und/oder dem Lagerausgangsförderer verbunden ist, Auftrags- und/oder Produkteinheiten ausgetauscht werden.

Auch sind auf der Verteilstrecke die Abstände zwischen den Ladungseinheiten klein (typischerweise 1/3 der durchschnittlichen Länge der Ladungseinheiten), so dass die Ausschleusrate der Pakete von der Verteilstrecke auf eine Einlagerstrecke begrenzt ist, z. B. kann nur jede 4. Ladungseinheit zum gleichen Ziel ausgeschleust werden. Diese Restriktion kann bei der Zuführung auf die Verteilstrecke (z.B. Sorter) nur mit hohem Aufwand bei der Zuführung eingehalten werden. Mit bekannter Technik entstehen Umläufer (bei Rückführung der nicht ausschleusbaren Pakete zum Anfang der Verteilstrecke) oder es werden Ladungseinheiten in die falsche Gasse eingelagert. Zweiteres hat Einschränkungen bei Leistung, Funktionalität oder Lieferqualität (Fehllieferungen) des Warenlagers zur Folge.

Dieses Problem wird durch ein Verfahren gemäß Anspruch 1 gelöst.

Erfindungsgemäß wird bei einem Verfahren zur Einlagerung und/oder Auslagerung von Paketen mit oder ohne Ladehilfsmittel in eine bestimmte oder aus einer bestimmten Lagerregalgasse eines Lagerregals, bei dem eine Verteilstrecke Pakete bei der Einlagerung anfördert und/oder bei der Auslagerung abfördert, wobei die Verteilstrecke benachbarte Ein- und/oder Ausschleusungen aufweist, welche auf Ein- und/oder Auslagerstrecken führen, die jeweils eine Lagerregalgasse ver- oder entsorgen, eine hohe Ein- und Auslagerleistung dadurch gewährleistet, dass bei Überlastung der Ein-/Auslagerstrecke einer Ziellagerregalgasse das Paket einer anderen Ein-/Auslagerstrecke einer anderen Zwischenlagerregalgasse zugeführt wird, wobei anschließend ein Transfer von der Zwischenlagerregalgasse zu der Ziellagerregalgasse oder umgekehrt innerhalb des Lagerregals durchgeführt wird.

Eine solche Umleitung von Paketen auf eine Alternativroute bei Überlastung einer Ein-/Auslagerstrecke hat den Vorteil, dass alle zur Verfügung stehenden Ein-/Auslagerstrecken gleichmäßig beansprucht werden können. Dadurch kann die Ein-/Auslagerkapazität eines Lagersystems optimal genutzt werden und eine maximale Ein-/Auslagerleistung erzielt werden, da einerseits ein Leerlauf und andererseits Staubildung einer Ein-/Auslagerstrecke vermieden werden kann. Durch eine anschließende Gassenkorrektur, d.h. ein Transfer von der Zwischenlagerregalgasse zu der Ziellagerregalgasse, kann das Paket seinem ursprünglich bestimmten Lagerort zugeführt werden.

Erfindungsgemäß ist also vorgesehen, dass bei Einlagerung und Überlastung einer Einlagerstrecke das Paket eine andere Zwischenlagerregalgasse erreicht, indem es über eine andere Einschleusung einer anderen Einlagerstrecke zugeführt wird.

Bei Anlagen mit hoher Leistung, also vielen Tausend Paketen pro Stunde, sind auf der Verteilstrecke die Abstände zwischen den Paketen gering. Es ist also vorteilhaft, bei der Einlagerung von Paketen bereits möglichst früh eine gleichmäßige Verteilung auf die zur Verfügung stehenden Einlagerstrecken zu gewährleisten, um einer Überlastung entgegen zu wirken.

Vorteilhaft ist außerdem, dass das Paket bei Überlastung einer Auslagerstrecke vor der Auslagerung über einen Transfer zwischen den Lagerregalgassen einer anderen Lagerregalgasse zugeführt und über eine andere Auslagerstrecke ausgelagert wird.

Ähnlich der Einlagerung, kann es auch bei der Auslagerung am Übergang von einer Auslagerstrecke auf die Verteilstrecke, d.h. bei der Ausschleusung, zu Staubildung kommen. Dies ist beispielsweise der Fall, wenn an einer Ausschleusung bei Ankunft eines Pakets in der Förderabfolge der Verteilstrecke keine ausreichende Lücke in der Paketabfolge gegeben ist. In diesem Fall kann durch die Auslagerung über eine andere Auslagerstrecke der Überlastung entgegenwirkt werden. Wenn mehrere Pakete aus derselben Lagerregalgasse angefordert werden, kann ferner eine Überlastung der zugehörigen Auslagerstrecke vermieden werden, indem die Pakete über benachbarte Auslagerstrecken ausgelagert werden.

Die Auslagerung über eine benachbarte Auslagerstrecke erfolgt über einen Transfer zwischen den Lagerregalgassen und darauffolgende Überführung des Pakets auf ein Transferelement, wie beispielsweise einen Warenlift, der das Paket auf die Auslagerstrecke überführt.

Der Transfer zwischen den Lagerregalgassen erfolgt durch eine Querförderung, d.h. Regallagerplätze von aneinanderstoßenden Regalen werden zum Durchreichen von Paketen von einer Regalseite zur nächsten verwendet. Dies kann beispielsweise durch Regalbediengeräte erfolgen, welche sich in den Lagerregalgassen bewegen und mit Lastaufnahmemitteln versehen sind.

Die Regalbediengeräte können die Transporteinheiten in zum Austausch vorgesehenen Querförderplätzen normal einlagern oder doppelt tief einlagern oder mehrfach tief einlagern. Die Regalbediengeräte der einen Gasse können also die Transporteinheiten in den Querförderplätzen so tief einlagern, dass sie bereits dem benachbarten Regal zuzurechnen sind und vom entsprechenden Regalbediengerät "normal" erreichbar sind.

Dazu können die Lastaufnahmemittel, z.B. Teleskopschienenarme, eine erweiterte Reichweite aufweisen.

Besonders bevorzugt ist es, wenn die Regalbediengeräte Einebenenregalbediengeräte, insbesondere Shuttle oder Satellitenfahrzeuge sind.

Auch kann der Transfer zwischen den Regalen aktiv oder passiv in Hinblick auf das Regalbediengerät erfolgen, d.h. der Querförderplatz kann einerseits einfach eine passive Abstellfläche sein, auf der das Regalbediengerät der einen Gasse Transporteinheiten abstellt (quasi einlagert) und von dem das Regalbediengerät der benachbarten Gasse Transporteinheiten entgegennimmt (quasi auslagert). Dabei kann dieser Vorgang pro Regallagerplatz bzw. Querförderplatz immer nur in eine Richtung oder in beide Richtungen erfolgen.

Andererseits ist es ebenfalls möglich den Querförderplatz mit entsprechender Fördertechnik auszustatten, wie angetrieben Rollen, lose Rollenbahn mit Neigung, Förderbänder etc. Dann kann das Regalbediengerät die Transporteinheiten abstellen und die Fördertechnik des Querförderplatzes nimmt den Transport vor.

Auch denkbar ist der Einsatz von quer fahrenden Shuttle oder sogenannten Roaming-Shuttle, die die Gassen wechseln bzw. zusätzliche Shuttles, die zum reinen Quertransport zwischen Zwischenlagergasse und Endlagergasse benutzt werden. Natürlich sind dafür auch andere Shuttle-Typen wie Mehrebenenregalbediengeräte und Lager mit Vorzonen für den Quertransport einsetzbar.

In einer besonders bevorzugten Variante werden im Regallager Ebenenregalbediengeräte vom Shuttle Typ verwendet, die einen Warenaustausch zwischen den Gassen über dedizierte Querförderplätze durch tiefere Einlagerung austauschen, wie dies in der eigenen DE 10 2012 107 176 A1 beschrieben ist. Somit kann weitestgehend auf Fördertechnik in der Vorzone verzichtet werden.

Erfindungsgemäß sind bei Einlagerungen die finalen Ziellagerplätze vorgegeben, insbesondere da aus einer bestimmten Gasse des Lagers an eine nachgelagerte Kommissionierung gezielt ausgelagert werden soll, wozu sogar einzelne Heber direkt an eine Kommissionierstation angebunden sein können. Der Einlagerungsvorgang soll aber kontinuierlich fortgesetzt werden, selbst bei überfüllter Förderstrecke oder des Lagers für diesen Ziellagerplatz, so dass zur Vermeidung von Staus bzw. Unterbrechen der Einlagerung alle Artikel zur Einlagerung aufgegeben werden können und sofern erforderliche für fortgesetzte Einlagerungen andere Zwischen-Ziele im Lager angefahren werden und die Umlagerung auf den finalen Zielplatz später erfolgen kann. Dadurch wird eine hoher, ununterbrochener Einlagerdurchsatz erreicht, ohne eine Unterbrechung bei Überlastung bzw. die Notwendigkeit zusätzlicher Puffer. Dadurch wird auch eine sonst notwendige "Sicherheits" Reserve reduziert oder ganz vermieden, die bei einem starren System notwendig wäre, um Systemblockagen/ Staus zu vermeiden.

Dabei wird, im Gegensatz zur DE 10 2009 029 438 A1, im Lager keine zusätzliche aktive Fördertechnik zum Umlagern der Artikel zwischen den Gassen verwendet. Vorliegend kann ein erforderlicher Gassenaustauch über die beschriebenen Querförderplätze mittels der ohnehin vorhandenen Regalbediengeräte erfolgen. Dies macht das System flexibler, da im Prinzip jeder Lagerplatz als ein Querförderplatz zwischen den Gassen ausgebildet sein kann. Zudem wird so viel Platz gespart.

Nachfolgend wird ein Ausführungsbeispiel der Erfindung anhand der Zeichnung näher erläutert.

Es zeigt:

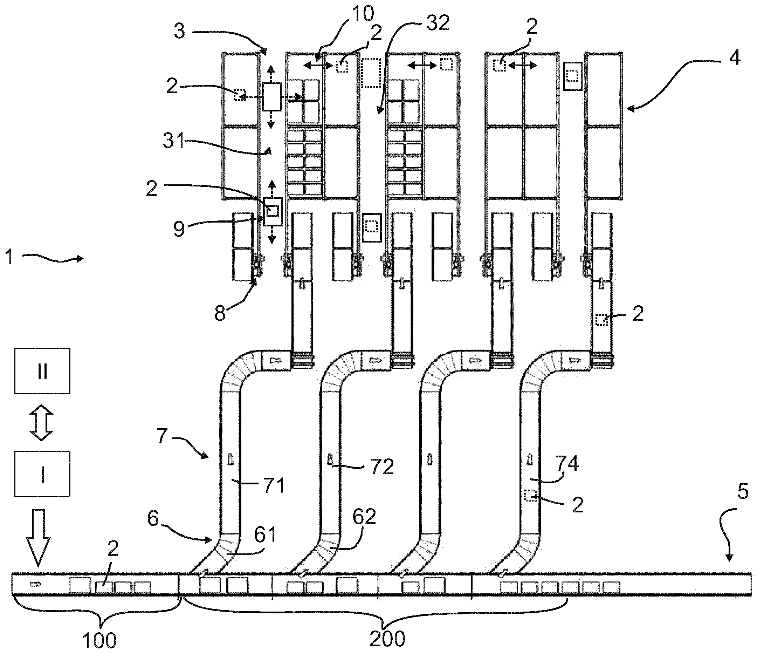

Fig. 1 eine schematische Draufsicht eines Fördersystems und eines Regallagers zur Ein- und Auslagerung von Paketen

Die Figur 1 zeigt eine Draufsicht auf ein Fördersystem 1 zum Einlagern von Paketen 2 in Lagerregalgassen 3, welche durch parallel und einander gegenüberliegend angeordnete Lagerregale 4 mit mehreren Ebenen gebildet werden. Das Fördersystem 1 umfasst eine Verteilstrecke 5, die Pakete 2 an- beziehungsweise abfördert. Zwischen der Verteilstrecke 5 und den Lagerregalen 4 sind Ein- bzw. Auslagerstrecken 7 angeordnet. Diese sind durch Ein- bzw. Ausschleusungen 6 mit der Verteilstrecke 5 und über Warenlifte 8 mit Lagerregalgassen 3 verbunden. Benachbarte Ein-/Auslagerstrecken 71 und 72 sind jeweils parallel angeordnet.

Die Pakete 2 werden durch die Warenlifte 8 von den Einlagerstrecken 7 in die Regalebenen der Lagerregale 4 bzw. von den Regalebenen auf die Auslagerstrecken 7 transportiert. Ein Transport der Pakete 2 innerhalb der Regalebenen der Lagerregale 4 erfolgt über Regalbediengeräte 9.

Hierbei bewegt sich vorzugsweise jeweils ein Regalbediengerät 9, beispielsweise ein Shuttle-Fahrzeug, auf jeder Regalebene. Das Regalbediengerät 9 ist mit Lastaufnahmemitteln, beispielsweise Teleskoparmen, ausgestattet, welche einen Transfer auf eine Transportfläche des Regalbediengeräts 9 hinauf oder von einer Transportfläche eines Regalbediengeräts 9 hinab, ermöglichen.

Nachfolgend wird das Verfahren im Falle der Einlagerung von Paketen 2 an Hand der Figur 1 erläutert.

Im Bereich der Zuführung 100 wird von einem Scanner der Barcode etc. des Pakets bei ausgelesen. Diese Information wird mit der übergeordneten Lagerverwaltungssteuerung ausgetauscht, die wiederum eine Zielgasse für das gescannte Paket bestimmt und somit die spätere Ausschleusung festlegt. Dazu werden als Kriterien beispielsweise der Gassenfüllgrad, das Zusammenhalten oder Verteilen der Produkte oder Produktgruppen oder das Konsolidieren von Aufträgen usw. herangezogen.

Anschließend wird überprüft, ob die bestimmte Ziellagerregalgasse erreichbar ist oder ob diese überlastet ist und nur über eine Zwischenlagerregallagergasse erreichbar ist.

Wenn ja, erfolgt einfach wie nachfolgend beschrieben die Ausschleusung im Bereich 200 auf die direkte Einlagerstrecke.

Ein Paket 2 wird dann auf der Verteilstrecke 5 zur Einlagerung gefördert und nach Passieren einer Ausschleusung 61 gelangt es über die Einlagerstrecke 71 zu dem Warenlift 8. Von dem Warenlift 8 wird das Paket 2 von einem Regalbediengerät 9 übernommen und so in eine Zielregalgasse 31 bzw. entsprechendes Lagerregal der Gasse eingelagert.

Wird allerdings festgestellt, dass die Ziellagerregalgasse nicht erreichbar bzw. überlastet ist, wird eine Ausweichlagerregalgasse (Zwischenlagerregalgasse) bestimmt.

Eine Überlastung kann z.B. angenommen werden, wenn der zeitliche Abstand von Ausschleusungen in die Einlagerstrecke der Ziellagerregalgasse einen vorgegebenen Schwellenwert unterschreitet und/oder zu viele Pakete bereits auf der Einlagerstrecke (noch) unterwegs sind.

Die Bestimmung der Verfügbarkeit der Gassen kann zyklisch nachverfolgt und bestimmt werden.

Ist die Verwendung einer Ausweichlagerregalgasse (Zwischenlagerregalgasse) bzw. Einlagerstrecke (oder Auslagerstrecke) notwendig, kann diese mittels der vorgegebener Kriterien bestimmt werden. Dazu wird geprüft, ob Einlagerung in die ermittelte Zwischenlagerregalgasse erlaubt bzw. möglich ist (analog oben).

Die Entfernung zu der Ziellagerregalgasse wird bei der Bestimmung der Zwischenlagerregalgasse möglichst klein gehalten. Falls mehrere Zwischenlagerregalgassen in Frage kommen, kann noch geprüft werden, auf welcher entsprechenden Einlagerstrecke sich weniger Pakete befinden und auf welcher Einlagerstrecke weniger Ausschleusungen in einem zeitlichen stattgefunden haben.

Im Falle einer Überlastung der Einlagerstrecke 71 der Ziellagerregalgasse, welche sich z.B. durch Staubildung äußert, wird das Paket 2 durch eine andere Ausschleusung, beispielsweise die benachbarte Ausschleusung 62, einer anderen Einlagerstrecke 72 als Ausweichroute zu der bestimmten Ausweichlagerregalgasse oder Zwischenlagerregalgasse 32 zugeführt. Damit wird die überlastete Einlagerstrecke 71 umgangen und somit entlastet. Folglich befindet sich das Paket 2 auf einer Einlagerstrecke, welche nicht mit der ursprünglichen Ziellagerregalgasse 31 verbunden ist. Über diese alternative Einlagerstrecke 72 gelangt das Paket 2 in die Zwischenlagerregalgasse 32.

Von dort wird es über einen Transfer zwischen den Lagerregalgassen 32 und 31 seiner Ziellagerregalgasse 31 zugeführt. Dieser Transfer erfolgt beispielsweise durch ein Regalbediengerät und über eine Querförderung. Dies bedeutet vorliegend, dass das Paket 2 durch Regallagerplätze von aneinandergrenzenden Lagerregalen 4 durchgereicht wird und somit auf die jeweils nächste Lagerregalseite und in die nächste Lagerregalgasse 31 gelangt.

In den Lagerregalen 4 sind in jeder Ebene besondere Austauschplätze 10 zum Querfördern von Paketen 2 von einem Regal 4 ins benachbarte Regal 4 angeordnet, so dass ein Austausch der Pakete 2 innerhalb der Lagerregale 4 selber stattfinden kann. Die Regalbediengeräte 9 beziehungsweise deren Lastaufnahmemittel können daher Pakete 2 in den Querförderplätzen 10 ablegen und in den entsprechenden Platz im benachbarten Regal 4 hineinschieben (oder durchschieben).

Der Transfer zwischen den Regalen 4 findet hier passiv bzgl. des Regals statt, d.h. der Querförderplatz 10 dient als passive Abstellfläche, auf der das Regalbediengerät 9 der einen Gasse 3 Pakete 2 aktiv abstellt beziehungsweise einlagert, und von dem das Regalbediengerät 9 der benachbarten Gasse 3 die Pakete 2 entgegennimmt beziehungsweise auslagert. Es wird also nur das Lastaufnahmemittel des Regalbediengeräts verwendet. Einen weiteren Antrieb oder Fördertechnik im Regal gibt es hier nicht. Dabei erfolgt dieser Vorgang pro Querförderplatz 10 in eine Richtung oder in beide Richtungen.

Es versteht sich, dass ein entsprechender "Umweg" auch über entferntere Regalgassen und Transferplätze 10 erfolgen kann, wie dies durch die gestrichelten Varianten in der Figur dargestellt sind. So kann z.B. ein Paket 2 über die Strecke 74 und der vierten Gasse umgeleitet werden und über einen mehrfachen Transfer über mehrere Gassen in die Zielgasse 31 gelangen.

Nachfolgend wird das Verfahren im Falle der Auslagerung von Paketen 2 anhand der Figur 1 erläutert.

Das Paket 2 verlässt einen Lagerregalplatz in der Lagerregalgasse 31, beispielsweise indem es von einem Regalbediengerät dem Lagerregalplatz entnommen und an den Warenlift 8 übergeben wird. Der Warenlift 8 transferiert das Paket 2 nachfolgend auf die Auslagerstrecke 71, welche das Paket 2 in Richtung der Ausschleusung 61 transportiert. Über die Ausschleusung 62 gelangt das Paket 2 auf die Verteilstrecke 5.

Im Falle einer Überlastung der Auslagerstrecke 71 wird das Paket 2 durch einen Querförderung, beispielsweise durch ein Regalbediengerät, in die Zwischenlagerregalgasse 32 transferiert und dort an einen Warenlift 8 übergeben. Von diesem gelangt das Paket 2 auf die Auslagerstrecke 72 und zu der Ausschleusung 62, über welche das Paket 2 der Verteilstrecke 5 zugeführt wird.

Das Verfahren wurde anhand der Ein-/Auslagerstrecken 71 und 72 beschrieben, selbstverständlich funktioniert das Verfahren äquivalent auch bei einer größeren Anzahl an Ein-/Auslagerstrecken 7 und Lagerregalgassen 3. Ebenfalls ist eine Umleitung über eine andere Ein-/Auslagerstrecke 7 als die benachbarte denkbar.

### Bezugszeichenliste

- 1: Fördersystem
- 2: Paket
- 3: Lagerregalgasse
- 31: erste Lagerregalgasse
- 32: zweite Lagerregalgasse
- 4: Lagerregal
- 5: Verteilstrecke
- 6: Ein-/Ausschleusungen
- 61: erste Ein-/Ausschleusung
- 62: zweite Ein-/Ausschleusung
- 7: Ein-/Auslagerstrecken
- 71: erste Ein-/Auslagerstrecke
- 72: zweite Ein-/Auslagerstrecke
- 8: Warenlift
- 9: Regalbediengerät
- 10: Querförderplatz

## Patentansprüche

1. Verfahren zur Einlagerung und/oder Auslagerung von Paketen (2) mit oder ohne Ladehilfsmittel in eine bestimmte oder aus einer bestimmten Lagerregalgasse (3) eines Lagerregals (4), bei dem eine Verteilstrecke (5) Pakete (2) bei der Einlagerung anfördert und/oder bei der Auslagerung abfördert, wobei die Verteilstrecke (5) benachbarte Ein- und/oder Ausschleusungen (6) aufweist, welche auf Ein- und/oder Auslagerstrecken (7) führen, die jeweils eine Lagerregalgasse (3) ver- oder entsorgen,
**dadurch gekennzeichnet,**
**dass** bei Überlastung der Ein-/Auslagerstrecke (7) einer Ziellagerregalgasse (31) das Paket (2) einer anderen Ein-/Auslagerstrecke (7) einer anderen Zwischenlagerregalgasse (32) zugeführt wird, wobei anschließend ein Transfer von der Zwischenlagerregalgasse (32) zu der Ziellagerregalgasse (31) oder umgekehrt innerhalb des Lagerregals (4) durchgeführt wird.

2. Verfahren nach Anspruch 1, **dadurch gekennzeichnet, dass** bei Einlagerung und Überlastung einer Einlagerstrecke (72) das Paket (2) eine andere Zwischenlagerregalgasse (32) erreicht, indem es über eine andere Einschleusung (61) einer anderen Einlagerstrecke (71) zugeführt wird.

3. Verfahren nach einem der Ansprüche 1 oder 2, **dadurch gekennzeichnet, dass** das Paket (2) bei Überlastung einer Auslagerstrecke (72) vor der Auslagerung über einen Transfer zwischen den Lagerregalgassen (3) einer anderen Lagerregalgasse (32) zugeführt und über eine andere Auslagerstrecke (71) ausgelagert wird.

4. Verfahren nach einem der vorhergehenden Ansprüche, **dadurch gekennzeichnet, dass** der Transfer von der Zwischenlagerregalgasse (32) zu der Ziellagerregalgasse (31) mittels einer Quer-Verlagerung innerhalb des Lagerregals (4) erfolgt.

5. Verfahren nach Anspruch 4, **dadurch gekennzeichnet, dass** die Quer-Verlagerung mittels einer Querfördertechnik, insbesondere Regalbediengeräten erfolgt, die aktiv das Paket (2) von der Zwischenlagerregalgasse (32) in eine benachbarte Regalgasse mittels der eigenen Lastaufnahmemittel durchschiebt.

6. Verfahren nach Anspruch 5, **dadurch gekennzeichnet, dass** als Regalbediengerät Ebenenregalbediengeräte vom Shuttle Typ verwendet werden, die einen Paketaustausch zwischen den Gassen über dedizierte Querförderplätze durch tiefere Einlagerung austauschen.

## Claims

1. Method for placing packets (2) into and/or out of storage with or without loading aids into/from a particular storage rack aisle (3) of a storage rack (4), wherein a distribution path (5) conveys packets (2) into storage and/or out of storage, wherein the distribution path (5) comprises adjacent introducing and/or discharging devices (6) which lead to incoming and/or outgoing paths (7) which each supply goods to a storage rack aisle (3) or remove goods therefrom,
**characterised in that**
if the incoming/outgoing path (7) of a destination storage rack aisle (31) is overloaded the packet (2) is supplied to another incoming/outgoing path (7) of another intermediate storage rack aisle (32), wherein then a transfer takes place from the intermediate storage rack aisle (32) to the destination storage rack aisle (31) or vice-versa within the storage rack (4).

2. Method as claimed in claim 1, **characterised in that** when placing goods into storage and if an incoming path (72) is overloaded, the packet (2) reaches another intermediate storage rack aisle (32) by being supplied to another incoming path (71) via another introducing device (61).

3. Method as claimed in any one of claims 1 or 2, **characterised in that** the packet (2), if an outgoing path (72) is overloaded, is supplied to another storage rack aisle (32) prior to being removed from storage via a transfer between the storage rack aisles (3) and is removed from storage via another outgoing path (71).

4. Method as claimed in any one of the preceding claims, **characterised in that** the transfer from the intermediate storage rack aisle (32) to the destination storage rack aisle (31) takes place by means of a cross-displacement within the storage rack (4).

5. Method as claimed in claim 4, **characterised in that** the cross-displacement takes place by means of cross-conveyance technology, in particular rack serving apparatuses which actively pushes through the packet (2) from the intermediate storage rack aisle (32) to an adjacent rack aisle by means of the dedicated load-receiving means.

6. Method as claimed in claim 5, **characterised in that** level rack serving apparatuses of the shuttle type are used as the rack serving apparatus, which effect a packet exchange between the aisles via dedicated cross-conveyance locations by deeper storage.

## Revendications

1. Procédé de stockage de colis (2) dans une allée déterminée (3) d'une étagère de magasin (4) et/ou de déstockage de colis d'une allée déterminée (3) d'un rayonnage de magasin (4), avec ou sans auxiliaire de chargement, procédé dans lequel des colis (2) sont acheminés lors du stockage et/ou emportés lors du déstockage par une section de distribution (5), la section de distribution (5) comportant des sas d'entrée et/ou de sortie (6) adjacents qui conduisent à des sections de stockage et/ou de déstockage (7) servant chacune à l'approvisionnement ou au désapprovisionnement d'une allée de rayonnage de magasin (3),
**caractérisé en ce que**
si la section de stockage/déstockage (7) d'une allée de rayonnage de magasin de destination (31) est surchargée, le colis (2) est acheminé vers une autre section de stockage/déstockage (7) d'une autre allée de rayonnage de magasin intermédiaire (32), un transfert de l'allée de rayonnage de magasin intermédiaire (32) vers l'allée de rayonnage de magasin de destination (31) ou inversement étant ensuite effectué à l'intérieur du rayonnage de magasin (4).

2. Procédé selon la revendication 1, **caractérisé en ce qu'**en cas de stockage et de surcharge d'une section de stockage (72), le colis (2) parvient à une autre allée de rayonnage de magasin intermédiaire (32) en étant acheminé vers une autre section de stockage (71) par le biais d'un autre sas d'entrée (61).

3. Procédé selon l'une des revendications 1 ou 2, **caractérisé en ce que**, en cas de surcharge d'une section de déstockage (72), le colis (2) est acheminé vers une autre allée de rayonnage de magasin (32) avant le déstockage par transfert entre les allées du rayonnage de magasin (3) et est déstocké par une autre section de déstockage (71).

4. Procédé selon l'une des revendications précédentes, **caractérisé en ce que** le transfert de l'allée de rayonnage de magasin intermédiaire (32) vers l'allée de rayonnage de magasin de destination (31) s'effectue par un déplacement transversal à l'intérieur du rayonnage de magasin (4).

5. Procédé selon la revendication 4, **caractérisé en ce que** le déplacement transversal est effectué par une technologie de transport transversal, notamment des gerbeurs, qui fait glisser activement le colis (2) de l'allée de rayonnage de magasin intermédiaire (32) jusque dans une allée de rayonnage adjacente à l'aide de moyens de réception de charges propres.

6. Procédé selon la revendication 5, **caractérisé en ce que** des gerbeurs plans de type navette sont utilisés comme gerbeur et effectuent par stockage plus profond un échange de paquets entre les allées par des d'emplacements de transport transversaux dédiés.
